# EUROPEAN PATENT APPLICATION

(11) **EP 4 765 766 A1**
(43) Date of publication of application: **24.06.2026**
(21) Application number: 24221961.6
(22) Date of filing: 19.12.2024
(51) Int. Cl.: H04L 61/2521, H04L 61/2585

(54) **MULTICAST NAT SECURITY**

(71) Applicant: EVS Broadcast Equipment SA, 4102 Seraing (BE)
(72) Inventor: van Rooy, Wouter Gerrit Adriaan, 5291 NW Germonde (NL)
(74) Representative: Rossmanith, Manfred

(57) **Abstract**

A network product, in particular a broadcasting aware edge-device, comprising
two or more NMOS nodes, wherein each NMOS node is connected to a different network segment, wherein each NMOS node receives SDP files from the network segment to which the NMOS node is connected,
a look-up table, wherein the look-up table stores network address translation rules between a first and a second network segment;
an SDP file re-writer, wherein the SDP file re-writer generates a modified SDP file by re-writing an SDP file received from one of the NMOS nodes by modifying the destination address according to the look-up table, and wherein the SDP file re-writer forwards the modified SDP file to the other NMOS node, wherein the other NMOS node registers the modified SDP file with another network segment.

## Description

### Field

The present disclosure relates to a network product (e.g. an Ethernet product) or processing device for broadcast production environments. In broadcast production environments ensuring the security of the network(s) is crucial for protecting critical infrastructure, maintaining operational integrity, and safeguarding against cyber threats.

### Background

Broadcast production environments often involve various control interfaces, such as those for vision mixing, audio mixing, media processing and camera control. Securing these interfaces is paramount to prevent unauthorized access to a network or tampering of video streams, which could disrupt live broadcasts or compromise the quality of production. Broadcasting infrastructure is not immune to cyber threats. Protecting against unauthorized access, malware, and other cyberattacks is essential to maintain the confidentiality, integrity, and availability of broadcast operations.

Dividing the network into segments based on trust levels is a fundamental security practice. This segmentation helps to contain potential security breaches by limiting the impact of an incident to a specific segment. Live IP broadcasting often involves the use of multicast for efficient distribution of media streams. Multicast in general allows to send data from one sender to multiple receivers simultaneously within a network. Multicast is particularly useful in scenarios where the same data, such as live video streams, online gaming updates, or real-time financial information, needs to be distributed to multiple recipients efficiently. To maintain operational flexibility, it is essential to transparently share multicast media streams and their metadata across different network segments. Remapping multicast addresses can be tedious and error prone. Care must be taken to avoid collisions between multicast streams when sharing them between segments. Collisions can lead to interference and quality issues in the production.

Deploying firewalls and intrusion detection/prevention systems adds an additional layer of defense. Configuring a traditional IP firewall is complex and error prone due to the intricate syntax and structure of rules, the critical importance of rule ordering and interdependencies, the challenges in adapting to dynamic network environments, and the potential for human errors such as typos or oversights. In summary, securing links between trusted and non-trusted network segments in an IP-based broadcasting production environment is essential for maintaining the reliability and integrity of broadcast operations. On the other hand, there is the challenge of allowing for the multicast media streams to pass with as little configuration overhead as possible.

Several methods to improve security and operation are known in the art:
Multicast NAT (Network Address Translation): Multicast NAT helps in managing IP address allocation by translating private multicast addresses used within a local network to global multicast addresses. This is crucial in large-scale broadcasting environments to avoid address conflicts and to ensure smooth data flow.

Security Enhancement: By hiding the internal network structure and using private multicast addresses, Multicast NAT prevents direct access to internal network resources from external entities. This hiding reduces the risk of attacks such as unauthorized access or Denial of Service (DoS) attacks on the broadcasting infrastructure.

Traffic Control and Filtering: Multicast NAT allows for implementing policies that control which multicast groups can send or receive data. This can include filtering based on IP addresses, protocols, or other criteria, thereby ensuring that only authorized devices can participate in the multicast group.

Network Segmentation: By using different multicast addresses and translation rules, different segments of the network can be isolated from each other. This ensures that issues or attacks in one segment do not spill over to others, enhancing overall network security and stability.

The NMOS controller plays a crucial role in modern IP-based media networks by implementing Networked Media Open Specifications (NMOS) to enable device discovery, registration, connection management, network control, and event management. It ensures interoperability, scalability, and simplified management of media devices, enhancing the overall efficiency and flexibility of media workflows. By adhering to open standards, such as the NMOS standard, the NMOS controller also future-proofs media networks, allowing the networks to evolve and adapt to new technologies and requirements. The Network Media Open Specifications (NMOS), in particular, is provided and developed by the Advanced Media Workflow Association. The specification defines an NMOS controller or daemon that enables automation so that Broadcast Controllers can identify and manage new devices, using automated workflows. In particular, an NMOS controller allows for discovery and registration of NMOS nodes in a network or network segment associated with the NMOS controller. An NMOS node specifically refers to a hardware or software component that announces its capabilities to the network, for example what kind of media the device handles, its IP address and available formats. By behaving according to NMOS, the node is discoverable by other devices on the network. For example, when a new camera is connected, an NMOS controller in the network can automatically detect and register the camera without manual configuration. The NMOS node can establish and manage media streams over IP connections, types of media streams can for example be broadcast streams, unicast streams, or multicast flows. A hardware or software function may be implemented on the device in order to configure the device as an NMOS node. An NMOS node can act as a source or destination for media streams. An NMOS node is essentially a device or a component or function that participates in the NMOS ecosystem. It can represent any entity that either produces, consumes, or processes media streams. Examples of NMOS nodes in a broadcast application include: Cameras, Video switchers, Audio mixers, Servers, Playout systems, Encoders, and Decoders.

Previous to IP based broadcast applications, broadcast applications typically utilized the Serial Digital Interface (SDI) standard. A broadcasting truck arrives at a location and interconnections are being made between venue and truck. These connections can easily be 50 or more video cables, which need to be connected to patch panels to get the camera's feeds and the return feeds. Such a set-up does not need control as the connections are point-to-point connections. However, establishing the physical interconnections is a lot of labor. At big venues setting up the point-to-point connections will easily take a week.

Today, in the context of IP based networks the situation has changed. A truck, for example a broadcasting truck, arrives at a location and IP based interconnections are being made between venue and truck. In such a scenario, there could easily be hundreds of media signals which need to be connected through a network to get the audio, meta data and return feeds of the cameras. Establishing the physical connection does not need to be controlled, since IP based connections are multi-point connections.

Making the physical interconnections in IP based networks is less labor as these are high bandwidth fiber interconnections holding up multiple media streams. Each connection, therefore, can carry packets belonging to several different streams. Thus, the number of physical interconnections is reduced. At big venues setting-up the interconnection(s) between trucks and the venue is something that can be achieved in a couple of hours.

Typically, these interconnections are based on trust. The networks are not segmented properly and there is a high chance of collisions in the network configuration, for example overlapping subnets or multicast stream addresses, or even harmful signals can pass from the venue (e.g. a stadium) to the truck or vice versa. Further, interconnection errors may occur as setting up interconnection is intensive manual work. Typically, lists with IP addresses are set-up and maintained manually by an operator.

### Description of the invention

A different mechanism is implemented by the present disclosure in order to provide a more scalable solution.

According to a first aspect of the invention a network product is suggested, in particular a network product, for example a broadcasting aware edge-device, comprising two NMOS nodes, wherein each NMOS node is connected to a different network segment, wherein each NMOS node receives SDP (Session Description Protocol) files from the network segment to which the NMOS node is connected, a look-up table, wherein the look-up table stores network address translation rules between a first and a second network segment; an SDP file rewriter, wherein the SDP file rewriter generates a modified SDP file by rewriting SDP files received by an NMOS node by modifying the destination address according to the look-up table, and wherein the SDP file rewriter forwards the modified SDP file to the other NMOS node, wherein the other NMOS node registers the modified SDP file with the network segment to which it is connected and to which the NMOS node is registered with.

The Session Description Protocol (SDP) is a format for describing multimedia communication sessions for the purposes of announcement and invitation. Its predominant use is in support of streaming media applications, such as voice over IP (VoIP) and video conferencing. SDP does not deliver any media streams itself but is used between endpoints for negotiation of network metrics, media types, and other associated properties. The set of properties and parameters is called a session profile. The SDP file therefore allows to establish connections.

The network product allows to patch multicast media streams from one network segment to the other. By being configured as two NMOS nodes, each connected to a different network segment, the network product acts as an intermediary between the network segments. In other words, whereas typically one device is configured as a single NMOS node by implementing the respective NMOS functions, the network device is configured to connect to at least two network segments and is configured to act as an NMOS node with respect to each of the network segments. Accordingly, the network device of the present invention provides two separate NMOS instances configured as NMOS nodes. The NMOS nodes can be provided as a hardware or software of the network device. Each of the NMOS nodes interfaces with one of the network segments via an interface of the network device. One node is, for example, registered with an NMOS controller of a first network segment and the other, second node is registered with the NMOS controller of a different second network segment. Segmenting the network into segments means to control the traffic between the segmented parts of the network. In this way, the media streams and NMOS nodes announced by the NMOS controller are only known or visible to the NMOS node of the network product which is connected to the respective controller. The network product patches the stream or streams from one network segment to another network segment while maintaining segmentation of the network segments by forwarding and modifying data packets internally from one interface to the other. Therefore, the topology of the different network segments remains hidden.

Preferably, the look-up table allows to translate a stream patched to a first NMOS node connected to a first network segment to a stream that is registered with the second network segment by the second NMOS node of the network product. Thereby, the network device is patching the stream from one network segment to the other network segment. After translation no information with respect to the original network segment is transferred to the respective other network segment to which the stream has been patched. The network product therefore allows to patch media streams from one network segment to the other, while maintaining optimal network security through network segmentation. By replacing the concept of a traditional firewall with a broadcasting aware edge device like the network product according to the first aspect, transparent sharing of media streams while maintaining segmentation can be achieved. Since the network product is IP based setting up the connections is easy and involves little labor. Therefore, the time and workload for setting up segmented network segments in broadcast applications may be reduced significantly with respect to manually configuring firewalls and/or physical connections. The network product provides at least two NMOS nodes each connected to a different network segment. Accordingly, in each network segment only the connected NMOS node of the network product is visible, because only this NMOS node is registered with the NMOS controller controlling the respective network segment. Thus, the respective NMOS controllers controlling the different network segments only exert control on the NMOS node registered with the controller. To put it differently, each NMOS controller communicates with the part of the network device, which is associated with the NMOS node associated with that part of the network device. Each NMOS node is in particular associated with the interface connected to the network segment with which the NMOS node is registered.

Preferably, the network product further comprises a packet header re-writer; wherein the packet header re-writer is configured to receive packets of an incoming media stream from a first one of the network segments and to modify the packet header information of each packet header of the received media stream according to a look-up table, and to forward the packets to another second network segment. In other words, after a modified SDP file associated with a media stream has been announced to a network segment different to the network segment in which the original media stream originated, the network product also modifies the incoming packets belonging to the media stream in accordance with the look-up table. Thus, the addresses of the packet header are modified in a similar manner as the SDP file belonging to the media stream. The packet header re-writer may for example be an RTP (Real-time Transport Protocol) packet header re-writer. The RTP is used for audio, video and metadata media streams.

Thus, modified packets belonging to the media stream in accordance with the modified SDP file are provided to the other network segment. Thereby, the network device translates not only the SDP file, but also the packets associated with a media stream incoming from one network segment, and outputs a modified media stream to the other network segment. Thus, the media stream is patched from one network segment to the other. Since also the packets are modified, the other network segment to which the media stream is patched gains no information on the origin network segment. From the perspective of the other network segment, the modified SDP file and the modified packets form a media stream originating at the network device. Thus, the network device from the perspective of the other network segment forms an NMOS sender that is registered with the NMOS controller of that network segment.

Preferably, the network product of the first aspect further comprises a first network interface connected to a first network segment and a second network interface connected to a second network segment, wherein each interface comprises a transmitter TX and a receiver RX, and wherein each one of the network segments is controlled by a NMOS controller. The network interface may, for example, be an LAN, WAN or WLAN interface. For example, the interface can be an Ethernet interface.

Preferably, any packet or media stream not matching an address of the look-up table is discarded by the network product. Therefore, the network product prohibits media streams from freely flowing between the network segments to which the network product is connected, in particular since only data of media streams for which a translation rule is stored in the look-up table are forwarded to the other network segment.

Preferably, the first NMOS node is configured to receive SDP files from a first NMOS controller of the first network segment or the SDP re-writer. Likewise, the second NMOS node is configured to receive SDP files from an NMOS controller of the second network segment or the SDP re-writer. The first NMOS node of the network product is connected to the first network segment and is registered with the first NMOS controller controlling the network segment and the second NMOS node of the network product is connected to the second network segment and is registered with the second NMOS controller controlling the network segment. The NMOS nodes may be physical or virtual instances implemented in the network device. By providing an SDP file of a media stream to an NMOS node registered with the NMOS controller, the NMOS controller patches the stream to that NMOS node. An NMOS node that receives a SDP file modified by the SDP re-writer announces the stream in accordance with the modified SDP file to its NMOS controller. By forwarding and modifying the SDP file from the first NMOS node to the second NMOS node connected to the other network segment, the network device patches a stream from one network segment to the other.

Preferably, the first NMOS controller registers media streams of the first network segment based on SDP files provided by the NMOS nodes connected to the first network segment and, in particular, registers new media streams based on the modified SDP files provided by the first NMOS node of the network product, wherein the modified SDP are received from the SDP-re-writer and are based on SDP files received by the second NMOS node of the network product. Thus, the network device registers new media streams based on the modified SDP file with the NMOS controller of the first network segment. The content of these new media streams corresponds to the content of the original media stream received from the second, other network segment.

Preferably, the second NMOS controller registers media streams of the second network segment provided by the NMOS nodes connected to the second network segment and, in particular, registers new media streams based on the modified SDP files provided by the second NMOS node of the network product, wherein the modified SDP files are received from the SDP-re-writer and are based on SDP files received by the first NMOS node of the network product. Thus, the network device registers new media streams based on the modified SDP file with the NMOS controller of the second network segment. The new media streams may be called virtual media streams as they have the same content as the original media stream corresponding to the original, unmodified SDP file.

Each of the NMOS controllers of the respective network segments therefore registers media streams which are provided by NMOS nodes connected to the respective network segment. Preferably the NMOS nodes of the network product may register virtual streams with their respective NMOS controller based on a modified SDP file based on an SDP file originally stemming from another network segment. In this way, the network product patches media streams from one network element to the other.

Preferably, the network translation rules translate multicast IP addresses from one network segment to multicast IP addresses of the other network segment.

Preferably, the first NMOS node receives media streams of the first network segment based on SDP files received from the first network and the second NMOS node registers virtual media streams based on the modified SDP files modified by the SDP file re-writer; wherein the modified SDP files are based on the SDP files received from the first network segment.

Preferably, the SDP file re-writer generates a modified SDP file by re-writing SDP files received by an NMOS node connected to a first network segment by modifying the destination address according to the look-up table and by modifying the source address to the interface address of the interface of the network product connected to the second network segment. The SDP file re-writer subsequently forwards the modified SDP file to the second NMOS node of the network product. The second NMOS node connected to the second network segment registers the modified SDP file and announces the media stream corresponding to the modified SDP file to the second network segment. The same process can be applied to SDP files received at the second NMOS node connected to the second network segment.

The network product according to the invention may comprise two or more NMOS nodes. Each of the NMOS nodes may be connected to a respective network segment. For example, the network product may comprise three or four NMOS nodes connecting the network product to three or four network segments. In case the network product comprises a plurality of NMOS nodes, the network product may accordingly be connected to a respective plurality of network segments. The functionality of the network product is the same as described above - it patches media streams from one network segment to one or more other network segments. A SDP file received at one of the NMOS nodes provided by the network segment in which the receiving NMOS node is registered is re-written by the SDP file re-writer. The SDP re-writer re-writes the SDP file in accordance with a look-up table as described above. The look-up table may store network address translation rules between the network segments, i.e. in case of more than two network segment the look-up table may store translation rules for network addresses to multiple other network addresses. However, a network address may still be translated to only one other network address of one other network segment. A network address may be translated to network addresses of all or some of the plurality of network segments. The look-up table, therefore, may store translation rules between a first network segment and a second network segment, and between the first network segment and multiple other network segments, for example between the first network segment and a third and/or a fourth network segment. The SDP re-writer may provide a re-written SDP file for each translation rule associated with the original destination network address of an SDP file received from an NMOS node registered with a first network segment. Thus, in case there is more than one translation rule for the original destination network address of the original SDP file, the SDP re-writer provides multiple modified SDP files. For example, the SDP file re-writer may provide a modified SDP file in accordance with the translation rule between the first network segment and a second network segment. In addition, the SDP file re-writer may provide another modified SDP file in accordance with a translation rule between the first network segment and a third network segment. The SDP file re-writer generates a modified SDP file in accordance with each translation rule for the original destination address of the SDP file. The SDP file re-writer generates a SDP file for each network segment to which the destination address of the original SDP file received from the first NMOS node is translated. The SDP file re-writer forwards the modified SDP files to the respective NMOS node registered with the network segment associated with the destination network address of the modified SDP file. In this way, the SDP file re-writer provides modified SDP file to each node connected to the network segments associated with the addresses to which the original destination address is translated. In this way, the network product patches a media stream to one or more different network segment. The respective NMOS nodes of the network product which receive the modified SDP files register the modified SDP files with the network segment in which the NMOS nodes are registered. The network product, in particular in accordance with the translation rules stored in the look-up table, patches a media stream from a first network segment to one or more other network segments.

By being configured as two or more NMOS nodes, wherein each NMOS node is connected to a different network segment, the network product acts as an intermediary between the network segments. In other words, whereas typically one device is configured as a single NMOS node by implementing the respective NMOS functions, the network device is configured to connect to at least two network segments and is configured to act as an NMOS node with respect to each of the network segments. Accordingly, the network device of the present invention provides two or more separate NMOS instances configured as NMOS nodes. The NMOS nodes can be provided as a hardware or software of the network device. Each of the NMOS nodes interfaces with one of the network segments of a plurality of network segments via an interface of the network device. Each node is, for example, registered with an NMOS controller of a respective different network segment. Segmenting the network into segments means to control the traffic between the segmented parts of the network. In this way, the media streams and NMOS nodes announced by the NMOS controller are only known or visible to the NMOS node of the network product which is connected to the respective controller. The network product patches the stream or streams from one network segment to one or more other network segments while maintaining segmentation of the network segments by forwarding and modifying data packets internally from one interface to the other. Therefore, the topology of the different network segments remains hidden.

Preferably, the network product further comprises a packet header re-writer. The packet header re-writer is configured to receive packets of an incoming media stream from a first network segment and to modify the packet header information of each packet of the received media stream according to a look-up table. In particular, the packet header re-writer may replace a destination network address of the packet header with a new network address in accordance with the look-up table. In case the look-up table provides translation rules for addresses from the first network segment to addresses of two or more network segments, the packet-header re-writer duplicates or multiplies the packets in order to provide modified packets for each network segment for which a translation rules exists, i.e. the packet header re-writer provides a new packet for each network segment to which the incoming stream is patched, and replaces the network address of the packet header with the respective translated network address, as provided by the look-up table. In particular, after a modified SDP file associated with a media stream has been announced to a network segment different to the network segment from which the original media stream originated, the network product also modifies the incoming packets belonging to the media stream in accordance with the look-up table. Thus, the addresses of the packet header are modified in a similar manner as the SDP file(s) belonging to the media stream. The functionalities of the packet header re-writer have also been described above with respect to two network segments. The packet header re-writer may for example be an RTP (Real-time Transport Protocol) packet header re-writer. The RTP is used for audio, and video and metadata media streams. In this way the packet header re-writer provides new modified packets for each of the network segments to which the incoming media stream has been patched, wherein the packet header of each packet comprises the translated address associated with the respective network segment. In particular, the packet header re-writer may forward the modified new packets to the NMOS node associated with the modified network address contained in the packet header. Thus, the packet header re-writer provides multiple new packets for each stream in the other network segment to which the original stream is patched. The network product forwards the new packets via the NMOS nodes to the respective network segment associated with the modified network address comprised in the packet headers. In this way, the network product provides a new packet for each translation rule associated with a different network segment.

The registration of the NMOS nodes and the media streams is done as described above. Each node registers itself with the NMOS controller of its network segment. A media stream is patched to a node by providing the respective SDP file. By re-writing and multiplying the SDP files, the network product patches media stream of one network segment to one or more media stream of any other network segment. The packet header re-writer subsequently provides the packets for the media stream in the one or more other network segments.

According to a second aspect of the invention a method for connecting network segments is suggested. The method comprises receiving an SDP file from an NMOS controller controlling a first network segment and modifying the SDP file according to a look-up table; and forwarding the modified SDP file to a second NMOS controller controlling a second network segment.

The method may be performed by a network product according to the first aspect. In particular, a first NMOS node of the network product according to the first aspect may receive SDP files from an NMOS controller of the first network segment and may forward the SDP file to an SDP file re-writer, which re-writes the SDP file in accordance with a look-up table, thereby translating the SDP file and accordingly the media stream associated with the SDP file to a new media stream of the second network segment. The translated new media stream may be called a virtual media stream in comparison to the original media stream. The look-up table may translate multicast IP addresses of the first network segment to multicast IP addresses of the second network segment. The method may further comprise forwarding the modified SDP file associated with the virtual media stream by the SDP re-writer to a second NMOS node of the network product and announcing the virtual media stream to the second network segment by forwarding the modified SDP file to the NMOS controller of the second network segment.

Preferably, modifying the SDP file of a media stream of a first network segment comprises replacing a destination address of the SDP file according to the look-up table and replacing a source address of the SDP file with an address of an interface connected to the other, second network segment controlled by the second NMOS controller.

Preferably, replacing a destination address of the SDP file according to a look-up table comprises matching the original destination address of the SDP file to a translation rule of the look-up table and replacing the original address with a replacement address specified by the translation rule.

Preferably, the method comprises receiving data packets with respect to a media stream of one of the network segments, modifying the destination address of the packet header with a modified destination address according to the look-up table and forwarding the modified packet to the other network segment.

The method may further comprise receiving an SDP file from an NMOS controller controlling a first network segment and modifying the SDP file according to a look-up table. The look-up table may comprise translations rules for a destination network address of the SDP file to one or more network addresses associated with respective one or more different network segments. In particular, the method comprises generating, for each translation rules associated with a destination network address of the SDP file, a modified SDP file and forwarding the modified SDP file or files to an NMOS controller controlling a network segment associated with a modified destination address of the modified SDP file. In this way, the method allows to provide new SDP files for one or more network segments in accordance with translation rules stored in the look-up table. Thereby, the method patches a media stream associated with the received SDP file to one or more different network segments.

The method may further comprise re-writing packet headers of packets of a first media stream associated with the SDP file received from the NMOS controller of the first network segment. The destination network address of the packet header may be modified in accordance with the look-up table, in particular in accordance with the translation rules. In case there is more than one translation rule for the media stream, e.g. the media stream is patched to two or more different network segments, the method provides a modified packet and respective modified packet header for each translation rule. In this way, the method provides modified packets for each network segment to which the media stream to which the received packets belong is patched or translated. The method comprises copying or duplicating the packets in order to provide a respective modified packet for each network segment to which the media stream to which the packets belong is patched. Thus, the method allows to patch an incoming or received media stream to two or more other network segments.

The implementations of the network product according to the first aspect and the above described features of the network product are as well possible implementations of the method according to the second aspect of the invention. Accordingly, features of the network product described in the implementations of the first aspect can be combined with the features of the method according to the third aspect.

According to a third aspect of the invention a computer program product is suggested that when executed on a processing unit performs the method of the second aspect. Advantageously, the computer program product allows to utilize the present invention on any network product, in particular network products connected to one or more IP based networks or network segments, for example in broadcast facilities.

### Brief description of the drawings

Exemplary embodiments of the present disclosure are illustrated in the drawings and are explained in more detail in the following description. In the figures, the same or similar elements are referenced with the same or similar reference signs. It shows:
Fig. 1 a schematic block diagram of an early IP era broadcast application,
Fig. 2 a schematic block diagram of an early IP era broadcast application with an additional firewall,
Fig. 3 a schematic block diagram of an IP based broadcast application with an additional firewall, wherein the network segments on both sides of the firewall are controlled by an NMOS controller,
Fig. 4 a schematic block diagram of a network product in accordance with the present disclosure,
Fig. 5 a schematic block diagram of a network product in accordance with the present disclosure showing exemplary entries in the look-up table and exemplary network ranges for multicast addresses in each network,
Fig. 6 a schematic block diagram of a network product in accordance with the present disclosure patching a media stream from network segment A to network segment B,
Fig. 7 a schematic block diagram of a network product in accordance with the present disclosure patching media streams from network segment A to network segment B and vice versa
Fig. 8 a schematic block diagram of a network product in accordance with the present disclosure showing the blocking of unsolicited traffic from one network segment to another, and
Fig. 9 a schematic representation of a method according to the present disclosure.

Same or similar elements in the figures are labeled with the same or similar reference signs. The flow of data streams is symbolized in the figures by arrows.

In the following the terms "IP packet" and "data packet" are used synonymously. The same applies to the terms "media stream" and "data stream" and "stream".

### Detailed description

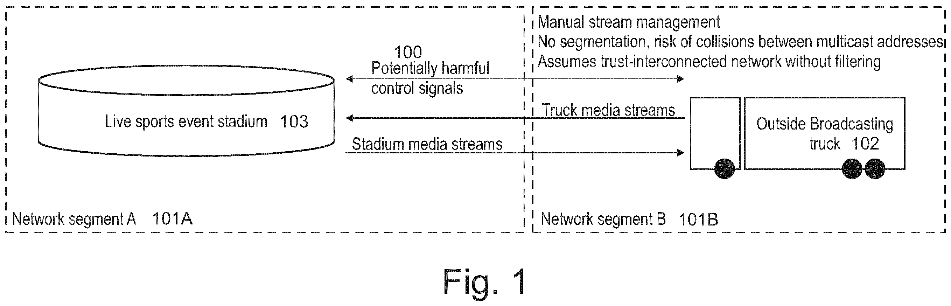

Fig. 1 shows a schematic representation of IP based connections between a broadcasting truck 102 and a broadcasting venue 103. Interconnections 100 are made between the venue 103 and the truck 102. The venue and the truck exemplarily represent two network segments controlled by different parties that are interconnected. In principle, interconnections could be made between different venues or different trucks or any combination thereof. Typically, hundreds of media signals need to be connected to the network to get video, audio, meta data and return feeds of cameras in a broadcasting environment. No control is needed, since the connections are multi-point connections. Physical connections are required, however, even at big venues the connections can be set up in several hours because high bandwidth fiber interconnections (each relaying multiple media streams) are typically used. However, the system is based on trust, because the different networks 101A, 101B of the truck and of the venue are not segmented and there is a high risk of collisions in the network configuration. For the sake of brevity only one truck 102 is shown, while in practice more than one truck may be connected to the venue 103. The truck and the venue in Fig. 1 are exemplary and in general correspond to two network segments. For example, sub-nets may overlap or multicast stream addresses may overlap. In addition, harmful signals can pass from the venue to a truck or vice versa. Further, manually setting up the connection is error prone, since setting up the connections is intensive work. Lists with IP addresses, for example IP addresses of equipment and/or multicast addresses identifying media streams, are maintained manually and must be checked for inconsistencies or collisions.

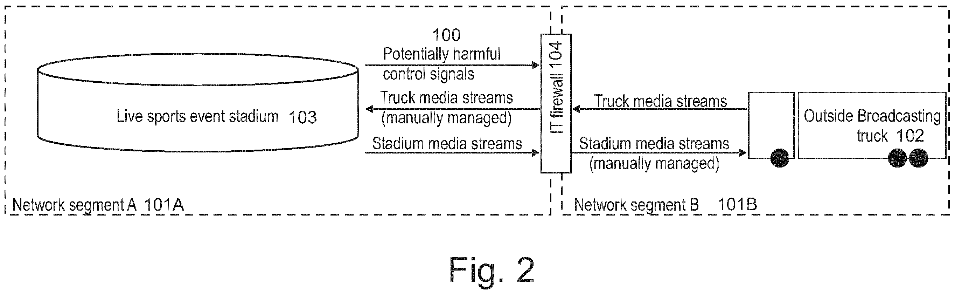

Fig. 2 shows a schematic representation of the broadcast venue of Fig. 1 with an additional firewall 104 between the different network segments 101A, 101B, i.e. the broadcast venue 103 and the media truck 102. However, the firewall 104 must be set up manually, which is time consuming and the firewall 104 must be set up by experienced or specialized IT engineers, which are not always available. As shown in Fig. 2, the network segment 101B of the broadcasting truck 102 is separated from the network segment 101A of the broadcasting venue 103 by a firewall 104. The firewall 104 is manually set up in order to let allowed packets having a multicast IP destination address belonging to the network segment 101B pass to network segment 101A. The firewall 104 is also set up to let packets having a multicast IP destination address belonging to network segment 101A pass to network segment 101B. The firewall 104 is also configured to let allowed media streams pass. In order to define which media streams may pass, the firewall is manually configured by an operator. Thus, although a firewall ensures that only trusted connections or streams may pass from one network segment to the other, the reduced time achieved by avoiding hardwired connections for each stream, is easily spent on setting up the network and firewall configuration and debugging the system. Any potentially harmful signals 100 originating from unknown streams or known sources for which the firewall is not configured to let data pass are blocked by the firewall.

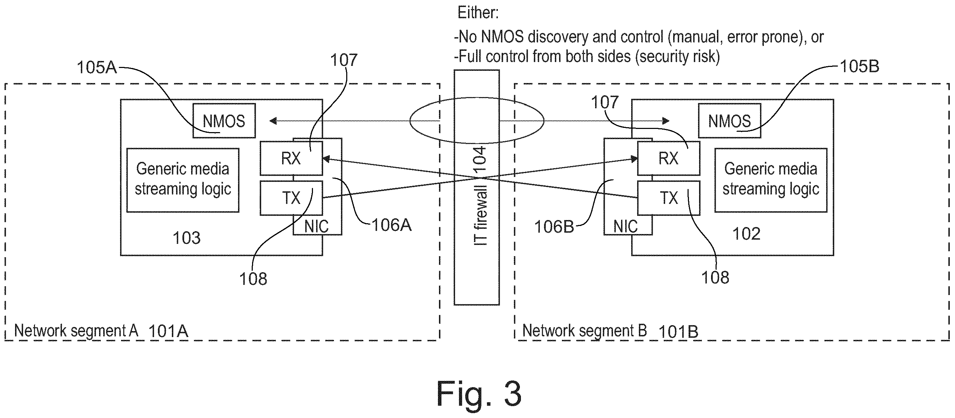

Fig. 3 is a schematic representation of a prior art system utilizing IP or packet based media streams in connection with NMOS (Networked Media Open Specification) controllers. An NMOS (Networked Media Open Specifications) controller can configure a broadcast IP-based network using a set of protocols and standards designed specifically for managing and controlling IP-based media networks. As such, a respective network segment is under the control of one NMOS controller. NMOS is developed by the Advanced Media Workflow Association (AMWA) and consists of several specifications, including discovery and registration, connection management. The NMOS controller performs the discovery and registration in accordance with NMOS IS-04. The NMOS controller (or registry) announces itself to the NMOS nodes in the network, which in turn register themselves with the NMOS registry. This configuration allows to build a dynamic list of available nodes, for example NMOS compliant devices (senders and/or receivers, such as cameras or other video or audio devices) with their device topology and sender/receiver streams. This process allows a new device acting as or configured as an NMOS node, such as a camera or a switcher or the like, to register itself with an NMOS registration and discovery system (RDS) provided by the NMOS controller. The NMOS node is implemented on the device. The registration process involves sending details about the device, such as its IP address, capabilities and available streams. Subsequently, other devices in the network can query the controller, in particular, the RDS to discover available devices and their capabilities. The NMOS controller therefore allows for dynamic network configuration and management.

The connection management in accordance with NMOS IS-05 defines an API (application programming interface) for connecting and disconnecting media streams between NMOS nodes. The NMOS controller uses these APIs to set up the connection. For example, an operator may set up connections between NMOS devices of the network segment under the control of the NMOS controller by using the API. As a part of establishing the connection, an NMOS node, for example a sender, generates an SDP (session description protocol) file that describes the media stream. The SDP file may include detailed information on the media stream, for example, the SDP version, the originator of the session, such as the username, session ID, version number, network address, the session name, the connection information such as network type, address type, and connection address, media type, transport protocol, port number, and various session attributes, including codec information and bandwidth requirements. A media stream is patched from one NMOS node to another by forwarding, by the NMOS controller hosting the NMOS registry, the SDP file from the sender to the receiver. In this way the controller informs the receivers about the incoming stream details, i.e. the NMOS controller patches the media stream from one node to another. In case of uni-directional communication, when the receiver can also act as a sender, a transceiver (i.e. the receiver also acting as sender) may sent an SDP file back to the sender. When a sender, for example a camera, needs to communicate with a receiver, for example a switcher or an encoder, the sender generates an SDP file to describe the media stream. The SDP file includes details such as media type, codec format, network addresses, and ports. The NMOS controller patches the stream from the sender to the receiver by providing the SDP file. The receiver uses the information provided by the SDP file to configure itself to receive the respective media stream. This includes setting up network sockets, configuring codecs, and preparing for media data reception. NMOS IS-05 allows for dynamic adjustments to the connection. If there are changes in the media stream (e.g., codec change, bitrate adjustment), new SDP files can be exchanged to update the session parameters. By following the above steps, an NMOS controller configures an SDP file to establish, manage, and monitor media streams in a broadcast IP-based network. The use of SDP files allows for clear and standardized communication of media stream details, ensuring compatibility and interoperability between devices.

As shown in Fig. 3, the two network segments 101A, 101B related to the broadcast venue 103 and the broadcast truck 102 are separated by an IP firewall 104. Each network segment 101A, 101B is controlled by an NMOS controller (not shown) which discovers and announces devices (NMOS nodes) to the network segment 101A, 101B and controls the patching of media streams, as outlined above. Data packets, media stream(s) or a single packet can pass the firewall 104 in accordance with the configuration of the firewall 104. Therefore, packets are passed directly from one network segment to the other. In particular, the source address of the packet is set to the address of the sender in the origin network and the destination IP address is an address of the other network segment, for example a multicast address of the other network. Since the NMOS controller (not shown) discovers and registers new devices, an NMOS controller of one network segment 101A, 101B will also be able to discover and register devices of the other network segment as long as the firewall forwards the respective data packets or media stream. In case NMOS traffic can freely flow between the network segments, NMOS nodes will, however, register themselves with only one NMOS controller.

The NMOS controller is operating within the network segment that it can reach - as defined by network policies. Typically there is no mechanism inside the controller to only allow registration from a specific network segment.

In case the firewall allows for no communication between the NMOS instances of the network segments, each NMOS controller will only be able to discover and register devices and streams in its own network segment. The devices and streams are subsequently announced to the network segment of this NMOS controller. Therefore, either there is control from both sides meaning that either one of the NMOS controllers can discover and register the devices and media streams in its network segment or there is no automatic registration of devices and media streams from the respective other network segment, which then requires manual configuration of the firewall and also manual registration of the streams passed by the firewall with the respective NMOS controller. In case of control from both sides, however, each device is still only registered with one NMOS controller.

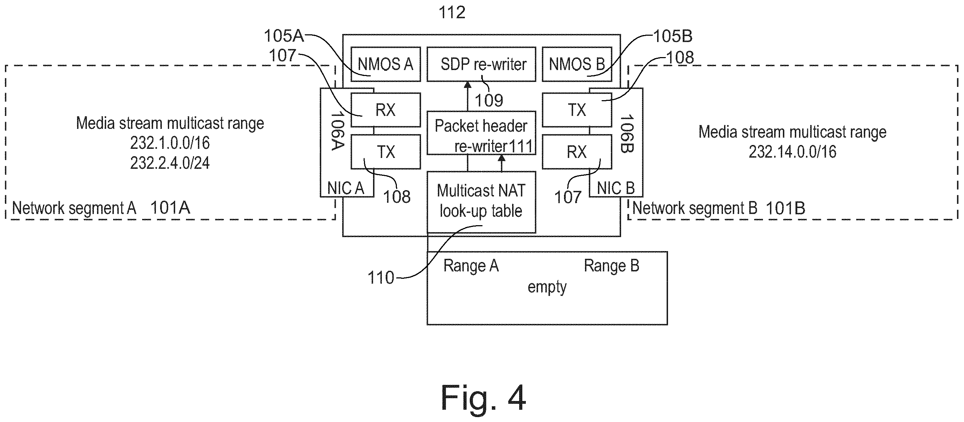

Fig. 4 is a schematic representation of network product 112 of the present disclosure. There are two network segments 101A, 101B. Each network segment may have its own media stream multicast address range. A media stream multicast range is a set of multicast IP addresses used to distribute media content efficiently to multiple recipients. A multicast IP address is a special type of IP address used to deliver data to a group of recipients simultaneously in an IP network. Multicast is a method of one-to-many or many-to-many communication, enabling the efficient transmission of information to multiple recipients without sending separate copies to each one. The IPv4 multicast addresses are in the range from 224.0.0.0 to 239.255.255.255. The IPv6 multicast addresses are in the range from FF00::/8 in Classless Inter-Domain Routing (CIDR) notation. Multicast addresses are used to identify multicast groups. Devices interested in receiving the data sent to a multicast address join the corresponding multicast group. Data sent to a multicast address is delivered to all devices that have joined the group associated with that particular multicast address. For example, devices use the Internet Group Management Protocol (IGMP) for IPv4 or Multicast Listener Discovery (MLD) for IPv6 to join a multicast group. When a device joins a multicast group, it notifies its local router, which then ensures that multicast traffic for that group is delivered to the device.

The network product 112 of the present disclosure has two network interfaces 106A, 106B each connected to one of the network segments 101A, 101B. The first network interface 106A is connected to the network segment 101A. The second network interface 106B is connected to the network segment 101B. Each network segment is controlled by a respective NMOS controller. Each network interface 106A, 106B has a receiver RX 107 and a transmitter TX 108. The receiver 107 is configured to receive network traffic from the network segment 101A, 101B to which the receiver 107 is connected. The transmitter 108 is configured to transmit network traffic to the network to which the transmitter 108 is connected. The network product 112 comprises two NMOS nodes 105A and 105B, i.e. the network product is configured to provide or implement two separate NMOS nodes 105A and 105B, one for each network segment 101A/B to which the network product is connected. Each node is connected to the respective network segment via the respective interface 106 of the network device. Each network segment 101A/B to which the device is connected comprises a respective NMOS controller. The first NMOS node 105A provided by the device is connected via the interface 106A with the first network segment 101A and registered with the NMOS controller of the first network segment 101A. The second NMOS node 105B is connected to the second network segment 101B via the interface 106B and registered with the NMOS controller controlling the second network segment 101B. The functionality of the NMOS controller registering and announcing NMOS nodes 105A, 105B in accordance with the NMOS specification has been described above with respect to Fig. 3. A first NMOS controller controls the first network segment 101A. A second NMOS controller controls the second network segment 101B. The NMOS controller registers and discovers devices configured as NMOS nodes and respective streams within the controlled network segment, i.e. the first NMOS controller registers and discovers devices of the first network segment 101A and the second NMOS controller 105B registers and discovers devices configured as NMOS nodes of the second network segment 101B. The first NMOS node of the network product is therefore discovered by the first NMOS controller of the first network segment and the second NMOS node provided by the network product is discovered by the second NMOS controller of the second network segment.

The respective NMOS controller also connects and disconnects media streams between NMOS nodes within the controlled network segment. In particular, the first NMOS controller receives SDP files with respect to a media stream from a device or NMOS node 105A of the first network segment 101A, which provides the media stream, and registers the SDP file with the network segment 101A including forwarding the SDP file to other devices or NMOS nodes of network segment 101A. The NMOS controller patches the media stream of the NMOS node by forwarding the SDP file to a receiver. The second NMOS controller receives SDP files with respect to media streams from a device or NMOS node of the second network segment 101B, which is providing the media stream, and registers the SDP file with the second network segment 101B and forwards the SDP file to other devices of the network segment 101B. The NMOS controller thereby patches a media stream from one NMOS node, e.g. a sender, to one or more other receiver NMOS nodes.

The network product 112 further comprises an SDP re-writer 109 and a look-up table 110. The look-up table stores translation rules between the multicast addresses of the two network segments 101A, 101B. Thus, the look-up table is a correspondence table that provides for each multicast address in one network segment a corresponding multicast address of the other network segment. The invention is not limited to multicast addresses. The look-up table may also store translation rules for unicast addresses or any other type of address as well as any suitable combination thereof. However, multicast addresses are typically used in broadcasting environment in which the network product of the present invention may be used.

The look-up table may be configured by an operator via an user interface of the network product. The operator may configure the network product via an interface of a client device communicatively coupled to the network product. Therefore, the operator may manually configure the connections between the first and the second network segment 101A/B. In particular, the operator can, by configuring the look-up table, patch streams from one network segment to the other.

Thus, each stream associated with a multicast IP address will be translated to an equivalent stream in the other network segment, in particular by translating the multicast IP address of that stream with respect to one network segment into a multicast address of the other network segment. The translation, in particular translates multicast IP addresses of a multicast stream patched by the NMOS controller of the first network segment 101A to the first NMOS node 105A of the network product to a multicast IP address of a stream in the second network segment 101B, which is exposed to the NMOS controller of the second network segment 101B by the second NMOS node 105B. In other words, by translating the IP addresses, from the perspective of the network product, an incoming media stream is translated to an outgoing media stream. A media stream patched to the network product in the first network segment is announced to the other network segment as an available media stream that can be patched to other NMOS nodes of the other network segment.

The look-up table stores and defines which multicast addresses of one network segment shall be translated to which multicast addresses of the other network segment. The look-up table defines which address of one network corresponds to which address of the other network address. Not all addresses of one network segment must have corresponding addresses in the other network, for example, in case a stream or a device should not be available in the other network system. The look-up table may be, for example, a multicast NAT look-up table. A multicast NAT look-up table is a data structure used by network address translation (NAT) devices to keep track of multicast group memberships and map them to corresponding translated addresses. A multicast NAT look-up table helps in efficiently routing multicast traffic across different network segments while maintaining the integrity of the original source and destination addresses. The look-up table allows the network product 112 to properly handle multicast packets and ensures that the packets reach the intended recipients in a seamless manner. In this context, a NAT (Network Address Translation) device is a hardware or software component that allows multiple devices within a local network to share a single public IP address for communication with external networks, such as the internet. The NAT device translates the private IP addresses of the devices within the local network into a single public IP address, such as a multicast IP address, when communicating with external networks, and vice versa. This translation helps to improve network security and efficiency by masking the internal network structure and conserving public IP addresses. Therefore, the look-up table may be considered as a multicast NAT look-up table in the context of the present disclosure.

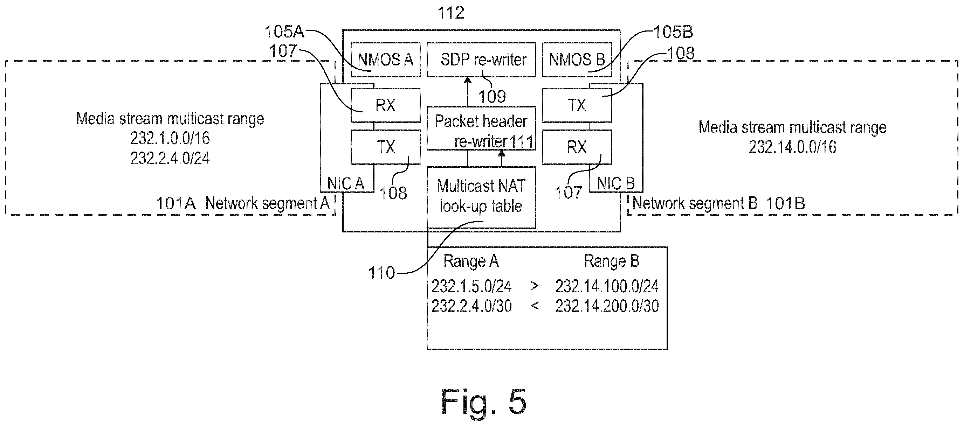

An exemplary NAT look-up table is shown in Fig. 5. A network segment 101A is associated with the media stream multicast range of 232.1.0.0/16 to 232.2.4.0/24, wherein the addresses are in accordance with the Classless Inter-Domain Routing (CIDR) notation (corresponding to a range from 232.1.0.0 to 232.1.255.255) and network segment 101B has a media stream multicast range of, for example 232.14.0.0/16. The multicast NAT look-up table may also allow for specifying smaller ranges that should be translated, for example 232.14.100.0/24 and 232.14.200.0/24. For example, the look-up table may intentionally not cover the full range of multicast addresses defined in network segment B or segment A. The reason being that some addresses are used for internal communication only. However, in general the NAT look-up table can translate any address range of one network segment, including the whole address range, to any other range of the other network segment. The NAT look-up table is stored in a look-up table component 110 of the network product 112 and comprises translation rules for sub-ranges of a respective media stream multicast range. For example, the look-up table shown in Fig. 5 translates any multicast stream having an address in the address range of 232.1.5.[0-255] of network segment 101A to an equivalent stream in network segment 101B at a corresponding address range 232.12.100.[0-255]. In a similar manner, a stream in the address range of 232.14.200.[0-3] of network segment 101B is translated to the equivalent or corresponding address range 232.2.4.[0-3] of network segment 101A. The translation direction may be uni- or bi-directional. A subrange C of addresses of network segment A may be translated to a subrange D of addresses of network segment B. However, the look-up table may indicate that streams associated with subrange D are not translated to subrange C in case of uni-directional translation. In the case of bi-directional translation, streams associated with range D would also be translated into the subrange C. The network product 112, therefore, in a similar manner can translate an address range of network segment 101B into an address range of network segment 101A. The translation may also be uni- or bi-directional. The device may also apply uni-directional translation from one subrange of segment A to another subrange of segment B and similarly apply uni-directional translation from a third subrange of segment B to a fourth subrange of segment A. The subranges may overlap or may not overlap. In the example, one address in each of the translated address ranges corresponds to one address of the other address range. The association can be achieved by associating the addresses with each other in increasing number. Thus, the first address of the first range corresponds to the first address of the second range and the second address of the first range corresponds to the second address of the second range and so on. The addresses are pairwise associated with each other in increasing order with respect to the address ranges. However, the mapping of the addresses can be configured in any manner as long as each address of the first range corresponds to one address of the second range.

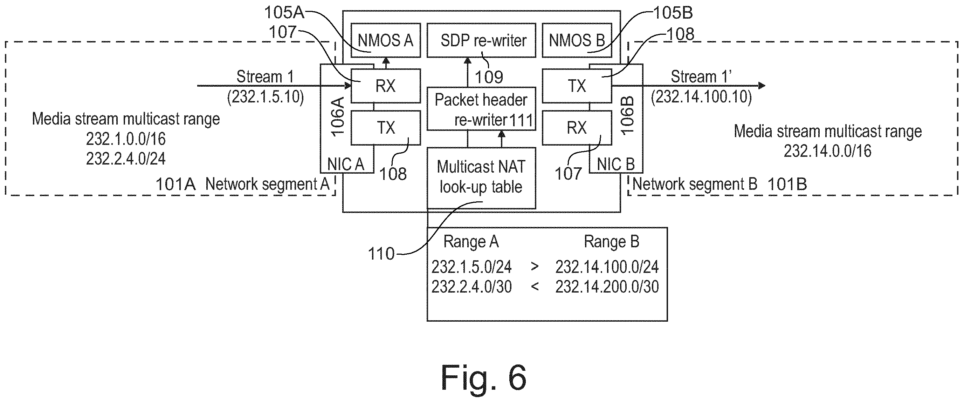

As shown in Fig. 6, in accordance with the look-up table 110, the network product 112 can patch streams from a first network segment 101A to a second network segment 101B. For example, a first media stream originating from the first network segment 101A is registered with the first NMOS controller controlling network segment 101A. The first NMOS controller has received the SDP file describing the media stream from the sender sending the media stream. The media stream is associated with a first destination IP address, for example 232.1.5.10. The first IP address may be a multicast IP address. This IP address is defined in the look-up table 110 stored in the look-up table component of the network product and associated with a second corresponding IP address of the other network segment 101B, for example 232.14.100.10. Thus, the look-up table provides a translation rule translating the first IP address of the first network segment to the second IP address of the second network segment.

The first NMOS node 105A forwards the SDP file to the SDP re-writer 109. The SDP re-writer 109 receives the SDP file from the first NMOS node 105A of the network product which has received the SDP file from the first NMOS controller of the first network segment 101A. The SDP file carries a destination address, for example a multicast destination address, in the example 232.1.5.10, the SDP re-writer 109 queries the look-up table 110 stored in the look-up table component for the destination address of the SDP file or a translation rule associated with the destination address. For example, the SDP re-writer 109 retrieves the look-up table and matches the destination IP address of the SDP file against the stored translation rules, for example a pair of addresses of the first network segment 101A and the second network segment 101B. In case the SDP re-writer 109 finds a translation rule for the destination address of the SDP file of the first media stream, the SDP re-writer 109 modifies the destination address of the SDP file in accordance with the look-up table, in particular in accordance with the translation rule associated with the original destination address of the SDP file. In the example shown in Fig. 6, the SDP re-writer 109 modifies the SDP file by replacing the original destination address 232.1.5.10 in accordance with the translation rule of the look-up table with the translated address 232.14.100.10. Likewise, the source address of the SDP file, which indicates the original sender, is re-written to match the address of the second network interface 106B of the network product 112. The SDP re-writer may also change any additional fields of the SDP file required to change on other protocol levels to maintain compliance in network segment B.

Each of the NMOS nodes 105A, 105B may forward SDP files, the SDP files being received from the network segment to which the node is connected, to the SDP re-writer 109. The SDP re-writer modifies the SDP file in accordance with the look-up table. Subsequently, the SDP re-writer forwards the modified SDP file to the respective other NMOS node of the network product, whereby the SDP file now carries a multicast address of the respective other network segment as destination address, instead of the original multicast address of the origin network segment, and whereby the SDP file carries the address of the network interface connected to the destination network segment, instead of the address of the original sender of the first media stream, as source address. In accordance with NMOS IS-05, in the example of Fig. 6, the modified SDP file is registered by NMOS node 105B of the network product with the respective second NMOS controller controlling the second network segment 101B and the stream is therefore announced to second network segment 105B, in particular as an available sender stream. The network product 112 therefore generates a new virtual stream described by the modified SDP file. The new (virtual or modified) stream, from the perspective of network segment 101B, originates from the network product, i.e. the source address is set to the interface 106B connected to network segment 101B, and the stream is destined for a multicast group associated with the multicast address of network segment B specified as destination address by the modified SDP file. Thus, the network product is configured to receive and to register an original stream from the first network segment and to register, in accordance with the look-up table, an equivalent new virtual stream with the second network segment.

In order to facilitate the forwarding/patching of the first media stream the network product further comprises a packet header re-writer 111. The packet header re-writer may be a real-time transport protocol (RTP) header re-writer. The network interface 106A receives the packets of the first media stream associated with the IP address 232.1.5.10. The packet header carries the IP address, in the example, 232.1.5.10, as destination address indicating that the packets are destined for the multicast group associated with this address. These packets are in accordance with the NMOS specification recognized as packets of a registered stream, i.e. the first media stream, which SDP file was transmitted by the sender of the first stream to the first NMOS controller, controlling the first network segment 101A and forwarded by the first NMOS controller to the NMOS node 105A of the network product in order to patch the stream to the NMOS node 105A. The packets are received via the first interface of the network product. The first NMOS controller has registered the first media stream in accordance with the received SDP file. As packets of a registered and patched stream, the packets are processed by the network product and forwarded to the packet header re-writer 111. The packet header re-writer 111 re-writes the destination address field of the header in accordance with the look-up table. The packet header re-writer 111 may match the destination address of a received packet against addresses or translation rules stored in the look-up table. Subsequently, the packet header re-writer 111 re-writes the destination address in accordance with the look-up table, in the example the destination address 232.1.5.10 is replaced by the address 232.14.100.10 which corresponds to the destination address of the (virtual) stream registered by means of the modified SDP file with the second NMOS controller controlling the second network segment 101B. The packet header re-writer 111 re-writes the source address with the address of the network interface 106B connected to the second network segment 101B. The network product subsequently outputs the packets over the network interface 106B connected to the second interface. From the perspective of network segment B the packets of the new stream originate, in accordance with the new source address, from the network product and corresponds to a media stream of the multicast group associated with the multicast address indicated by the new destination address, i.e. of a multicast group of the second network segment 101B. The packets, from the perspective of the second network segment, therefore belong to the media stream announced by the second NMOS node 105B in accordance with the modified SDP file. The second network segment 101B, therefore, has no knowledge of the original origin or destination of the stream provided by the sender of network segment 101A. Thus, the network product hides the topology of network segment 101A from network segment 101B and maintains segmentation, in particular in broadcast applications. Further, modifying the look-up table allows to re-write multicast address ranges that would otherwise be in conflict with an address range that can be managed on either side of the firewall.

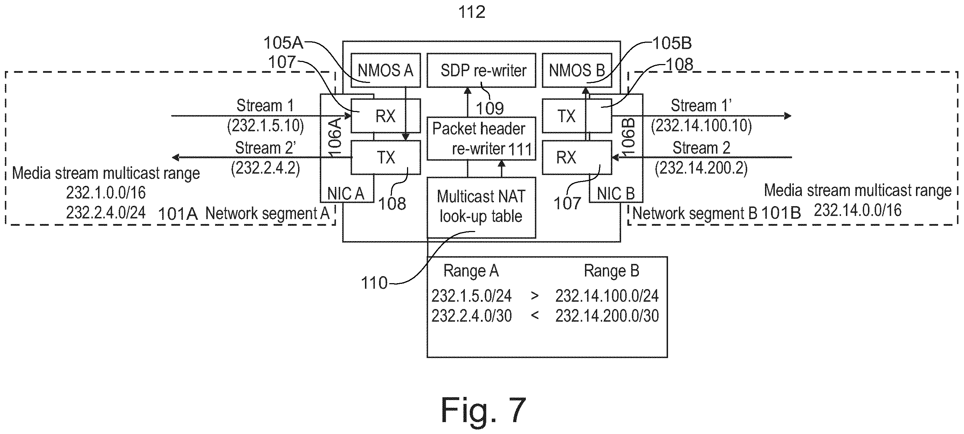

As shown in Fig. 7, in the same manner as explained above in addition a stream originating in the second network segment 101B may be patched to the first network segment 101A. As explained with respect to Fig. 6, the first stream originates from a sender in network segment A and has a multicast address 232.1.5.10 which is, in accordance with the look-up table, translated to 232.14.100.10. The SDP file registering the first stream with the first NMOS controller and forwarded to the NMOS node 105A is modified by the SDP file re-writer 109 by replacing the original destination address 232.1.5.10 with the translated address 232.14.100.10. The modified SDP file is registered with the second NMOS controller of the second network segment by the NMOS node 105B of the network product. The headers of the packets of the first media stream that is registered with the first NMOS controller and patched to the first NMOS node 105A of the network product are modified by the packet header re-writer. The packet header re-writer replaces the original destination address of the packet header with the translated destination address 232.14.100.10 and the original source address with the address of the second network interface 106B. The packets are output by the second network interface 106B as packets of the multicast stream belonging to the translated address of the second network segment 101B.

In a similar manner a second media stream is patched from the second network segment B to the first network segment A. The second stream originates from a sender in the second network segment B and has a multicast address 232.14.200.2 which is, in accordance with the look-up table, translated to 232.2.4.2. The SDP file registering the second stream with the second NMOS controller is forwarded to the second NMOS node 105B of the network product and modified by the SDP file re-writer 109 by replacing the original destination address 232.14.200.2 with the translated address 232.2.4.2. The modified SDP file is forwarded and registered, by NMOS node 105A of the network product, with the first NMOS controller of the first network segment 101A. The headers of the packets of the second media stream, that is registered with the second NMOS controller, are accordingly modified by the packet header re-writer 111 after they have been received via the second network interface 106B connected to the second network segment. The packet header re-writer 111 replaces the original destination address 232.14.200.2 of the packet header with the translated address 232.2.4.2 and the source address with the address of the first network interface 106A. Subsequently, the packets are output by the first network interface 106A as packets of the multicast stream belonging to the translated address of the first network segment 101A. A multitude of media streams may be patched in this manner in both directions. The patching and the transmission of the stream may happen concurrently or subsequently.

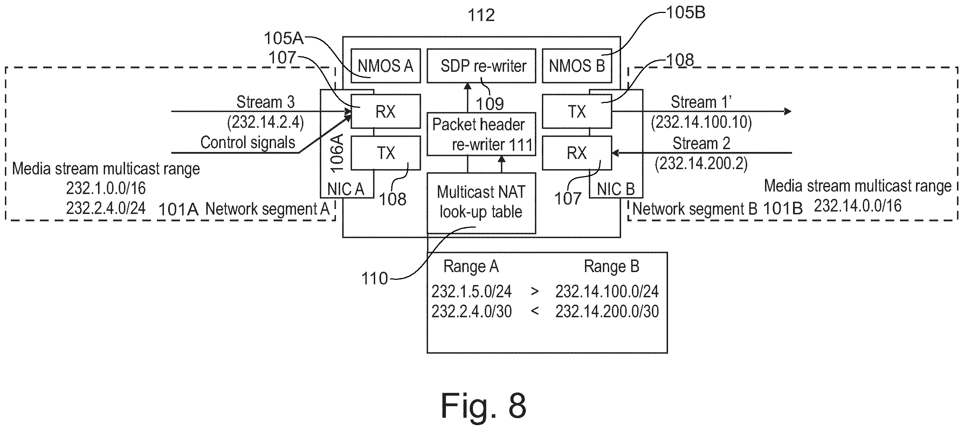

Fig. 8 shows a case in which the network product 112 receives signals for which the network product has not translation rules. The streams of the first network segment 101A are registered with the first NMOS controller and the streams of the second network segment 101B are registered with the second NMOS controller, the SDP re-writer 109 and the packet header re-writer 111 translate the SDP files and the packets in accordance with the translation rules stored in a look-up table 110 in the look-up table component, thereby patching the stream from one network segment to the other. When a stream originating from a sender in any of the network segments has a multicast address that is not matching any of the translation rules in the look-up table, it will be discarded by the network product 112. Therefore, the stream is not patched to the other network segment and remains hidden from the other segment. For example, the third stream shown in Fig. 8 has an IP address 232.14.2.4, which could collide with an existing stream in network segment 101B, for example, since there is no translation rule, network segment 101B has no reason to reserve the address. However, since the network product 112 finds no translation rule for the stream in the look-up table, the packets belonging to the third stream are discarded. The same is true for any unicast/broadcast or control signals that are not associated with any of the translation rules of the look-up table. In the network products of the present disclosure any data or control signals that are unrelated to translation rules stored in the look-up table are discarded. Thereby the network product avoids that signals from one network segment can pass to the other network segment, in particular, as long as there is no translation rule allowing the signals to pass. Further, because of the translation of the SDP file re-writer and the packet header re-writer, the original source and destination addresses are not forwarded to the other network segment. In case a signal or stream is patched from one network segment to the other, the respective other network gains no information on the origin of the data or the other network segment. The topology of the other network segment is therefore hidden. From the perspective of each network segment, all streams are registered with the NMOS controller controlling the respective network segment and originate from senders with the network segment including the network interface 106 of the network product connected with the network segment 101. The network product is aware of domain, i.e. network segment, specific control and discovery interfaces, i.e. the NMOS register and SDP files. The network product automatically re-writes the SDP files in accordance with the look-up table. Therefore, only the look-up table has to be configured, since, for each network segment, only the streams to be patched (forwarded to the other segment) have to be defined as well as a range of addresses that can be used for the virtual stream equivalent to the stream of the other network segment. Thus, an operator or automatic programming unit only has to know the number of streams that will be patched from the other network to provide sufficient address space and must indicate how many streams are provided by its own network segment and their respective addresses.

Accordingly, each NMOS controller has full control of its network segment and only of its network segment, thus the network remains segmented although the network product patches media streams from one network segment to the other. In view of the above, the network product allows an easy configuration that is not error-prone and does not require specialists for the configuration.

Individual components or functionalities of the present invention are described in the embodiments and respective examples as software or hardware solutions. However, this does not mean that a functionality described as a software solution cannot also be implemented in hardware and vice versa. Similarly, mixed solutions are also conceivable for a person skilled in the art, in which components and functionalities are simultaneously partially realized in software and hardware.

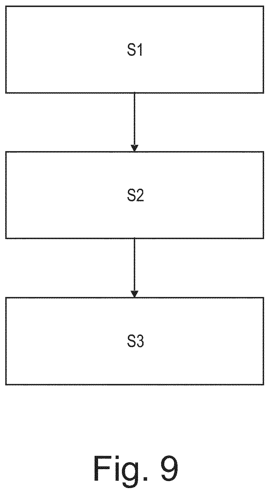

Fig. 9 shows a schematic representation of a method according to the present disclosure. The method may be performed by the network product. The method allows to connect two network segments, each of which is controlled by one NMOS controller. An SDP file with respect to a media stream is received in step S1 by a first NMOS controller controlling a first network segment. The first NMOS controller registers the SDP file with the first network. The media stream is further patched to a first NMOS node of the network product connected to the first network segment. Subsequently, the SDP files and data packets belonging to the stream are modified according to a look-up table in step S2. The details of the modification have been described above with respect to the network product. The look-up table may store translation rules with respect to the destination address of the SDP file, in particular in case the destination address is a multicast IP address. A modified SDP file is generated by replacing the destination address of the SDP file in accordance with the translation rule. Subsequently in step S3, the modified SDP file is forwarded to a second NMOS controller controlling a second network segment. In particular, the second NMOS node of the network product to which the SDP re-writer forwards the modified SDP file registers the SDP file with the second NMOS controller. The second NMOS controller announces the modified SDP file to the second network. Further, the method may comprise replacing the source address with the address of the interface that outputs the SDP file after modification. In a similar manner packets belonging to a stream for which a translation rule exists are translated by replacing the destination address in accordance with the look-up table. Further, the source address may be replaced with the address of the interface that outputs the packets after modification. It is to be understood that the method steps performed by the network product described above can be combined or can be part of the method according to the present disclosure.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | Potentially harmful control signal | S1 | Receiving SDP file |
| 101A | Network segment A | S2 | Modifying SDP file |
| 101B | Network segment B | S3 | Forwarding modified SDP file |
| 102 | Broadcasting truck | | |
| 103 | Venue | | |
| 104 | Firewall | | |
| 105 A, B | NMOS node A, B | | |
| 106 A, B | NIC Interface A, B | | |
| 107 | Receiver RX | | |
| 108 | Transmitter TX | | |
| 109 | SDP re-writer | | |
| 110 | Look-up table | | |
| 111 | Packet header re-writer | | |
| 112 | Network product | | |

## Claims

**1.** A network product, in particular a broadcasting aware edge-device, comprising
two NMOS nodes, wherein each NMOS node is connected to a different network segment, wherein each NMOS node receives SDP files from the network segment to which the NMOS node is connected,
a look-up table, wherein the look-up table stores network address translation rules between a first and a second network segment;
an SDP file re-writer, wherein the SDP file re-writer generates a modified SDP file by re-writing an SDP file received from one of the NMOS nodes by modifying the destination address according to the look-up table, and wherein the SDP file re-writer forwards the modified SDP file to the other NMOS node, wherein the other NMOS node registers the modified SDP file with another network segment.

**2.** The network product of claim 1, further comprising
a packet header re-writer; wherein the packet header re-writer is configured
- to receive packets of an incoming media stream from one of the network segments,
- to modify the packet header information of each packet header of the received media stream according to the look-up table, and
- to forward the packets to the other network segment.

**3.** The network product of any of the preceding claims, further comprising:
a first network interface connected to a first network segment and a second network interface connected to a second network segment, wherein each interface comprises a transmitter TX and a receiver RX, and wherein the SDP files and packets associated with media streams are received and transmitted from and to the first network segment via the first interface and wherein SDP files and packets associated with media streams are received and transmitted from and to the second network segment via the second interface,
wherein each of the network segments is controlled by an NMOS controller.

**4.** The network product of any of the preceding claims, wherein any packet or media stream not matching an address of the look-up table is discarded.

**5.** The network product of any of the preceding claims, wherein the first NMOS node is configured to receive SDP files from a first NMOS controller of the first network segment or the SDP file re-writer and the second NMOS node is configured to receive SDP files from a second NMOS controller of the second network segment or the SDP file re-writer.

**6.** The network product of any of the preceding claims, wherein the network translation rules translate multicast IP addresses from one network segment to multicast IP addresses of the other network segment.

**7.** The network product of any of the preceding claims, wherein the first NMOS node receives media streams of the first network segment based on SDP files received from the first network and the second NMOS node registers virtual media streams based on the modified SDP files modified by the SDP file re-writer; wherein the modified SDP files are based on the SDP files received from the first network segment.

**8.** The network product of any of the preceding claims, wherein the SDP file re-writer generates a modified SDP file by re-writing SDP files received by an NMOS node connected to one network segment by modifying the destination address according to the look-up table and the source address to the interface address of the other network segment, and to forward the modified SDP file to the other NMOS node, wherein the other NMOS node registers the modified SDP file and announces the registered SDP file to the other network segment.

**10.** A method for connecting network segments, the method comprising:
receiving an SDP file from a first NMOS controller controlling a first network segment;
modifying the SDP file according to a look-up table;
forwarding the modified SDP file to a second NMOS controller controlling a second network segment.

**11.** The method of claim 10, wherein the modifying comprises replacing a destination address of the SDP file according to the look-up table and replacing a source address of the SDP file with an address of an interface connected to the network controlled by the second NMOS controller.

**12.** The method of claim 11, wherein replacing according to a look-up table comprises matching the original destination address of the SDP file to a translation rule of the look-up table and replacing the original address with a replacement address specified by the translation rule.

**13.** The method of claim 10 to 12, wherein the method further comprises:
receiving data packets with respect to a media stream of one of the network segments, and
modifying the destination address of the packet header with a modified destination address according to the look-up table;
forwarding the modified packet to the other network segment.

**14.** A computer program product that, when executed on a processing unit, performs the method of claims 10 to 13.
